# EUROPEAN PATENT SPECIFICATION

(11) **EP 2 607 103 B1**
(45) Date of publication and mention of the grant of the patent: **27.04.2016**
(21) Application number: 12198492.6
(22) Date of filing: 20.12.2012
(51) Int. Cl.: B60C 1/00, C08C 19/20, C08C 19/22, C08C 19/25, C08L 9/00, C08L 9/06

(54) **RUBBER COMPOSITION AND TIRE CONTAINING FUNCTIONALIZED POLYBUTADIENE AND FUNCTIONALIZED STYRENE/BUTADIENE ELASTOMERS**
GUMMIZUSAMMENSETZUNG UND REIFEN MIT FUNKTIONALISIERTEM POLYBUTADIEN UND FUNKTIONALISIERTEN STYREN-/BUTADIENELASTOMEREN
COMPOSITION DE CAOUTCHOUC ET PNEU CONTENANT UN POLYBUTADIÈNE FONCTIONNALISÉ ET ÉLASTOMÈRES DE STYRÈNE/BUTADIÈNE FONCTIONNALISÉS

(30) Priority: 22.12.2011 US 201161579138 P; 31.10.2012 US 201213664468
(43) Date of publication of application: 26.06.2013
(73) Proprietor: The Goodyear Tire & Rubber Company, Akron, OH 44316-0001 (US)
(72) Inventor: Francik, William Paul, Bath, OH Ohio 44333 (US); Alwardt, Christin Louise, Akron, OH Ohio 44312 (US); Rachita, Michael Joseph, North Canton, OH Ohio 44720 (US); Rodewald, Stephan, Canal Fulton, OH Ohio 44614 (US)
(74) Representative: Kutsch, Bernd

(56) References cited:
- EP-A1- 2 182 028
- EP-A1- 2 184 317
- EP-A1- 2 213 477
- EP-A2- 2 177 562

## Description

### Field of the Invention

The invention relates to a rubber composition comprising a combination of functionalized polybutadiene rubber and functionalized styrene/butadiene rubber, and to a tire comprising such a rubber composition.

### Background of the Invention

It is normally desirable for pneumatic rubber tires to contain components which have beneficial viscoelastic properties.

For example, in the case of treads for pneumatic rubber tires, it is often desired that the treads are of a rubber composition which will provide properties which promote good wear resistance, wet traction (wet skid resistance) and acceptable rolling resistance for the tire itself. Such desirable rubber composition properties for the various tire components rely, in large part, upon viscoelastic properties of the elastomers, or combination of elastomers.

For example, in order to promote lower rolling resistance and to promote tread wear resistance properties for a tire tread, elastomers having relatively high rebound property values, representing a relatively low energy loss during operation of the tire have been used to provide tire tread rubber compositions.

However, to promote wet traction (wet skid resistance) for a tire tread, elastomers having a relatively low rebound value, representing a relatively high energy loss during operation of the tire have been used for a tire tread rubber composition.

It is appreciated that it is often difficult to improve one of such viscoelastomeric properties without adversely affecting one or more of the other properties. Such difficulty and challenge is well known to those having skill in such art.

In order to balance such viscoelastically inconsistent properties, mixtures of various elastomers are normally used for tire tread rubber compositions. For example, mixtures of styrene/butadiene elastomers and polybutadiene elastomers have been used for a tire tread rubber compositions, sometimes with an addition of cis 1,4-polyisoprene rubber.

It has previously been suggested to provide a tire tread as a silica reinforcement-containing rubber composition containing a combination of functionalized styrene/butadiene rubber together with polybutadiene rubber (non-functionalized).

Such styrene/butadiene rubber was functionalized with a combination of alkoxysilane and thiol groups to promote enhancement of the silica reinforcement for the rubber composition. In this manner, then, it is envisioned that the silica (e.g. precipitated silica) becomes associated with the functionalized styrene/butadiene rubber by reaction of the precipitated silica's hydroxyl groups with the functionalized styrene/butadiene rubber instead of, or in preference to, the polybutadiene rubber and in such manner preferentially provides reinforcement, or at least greater reinforcement, for the functionalized styrene/butadiene rubber instead of the non-functionalized polybutadiene rubber.

For this invention, it is desired to evaluate promoting enhancement of silica reinforcement of the polybutadiene component of the rubber composition, and thereby enhanced, or improved, silica reinforcement for the rubber composition itself, by providing the polybutadiene in a form of functionalized polybutadiene to be used in combination with a functionalized styrene/butadiene rubber.

For this invention, it is also desired to provide the functionalized styrene/butadiene with both a moderate bound styrene content (e.g. from 15 to 28 or 34 percent of the styrene/butadiene rubber) to promote compatibility (miscibility) with the functionalized polybutadiene and, also, with an elevated bound styrene content (e.g. from 35 to 45 percent of the styrene/butadiene rubber) to promote incompatibility (immiscibility) with the functionalized polybutadiene.

In the description of this invention, the term "phr" where used means "parts of material per 100 parts by weight rubber. The terms "rubber" and "elastomer" may be use interchangeably, unless otherwise indicated. The terms "rubber composition", "compounded rubber" and "compound'' may be used interchangeably to refer to rubber, or elastomer(s), which has been blended or mixed with various ingredients and materials, unless otherwise indicated, and such terms are well known to those having skill in such art.

For this invention, the term "functionalized" relates to elastomers which contain at least one functional group which is reactive with hydroxyl groups (e.g. silanol groups) contained on silica reinforcement for the rubber composition.

EP-A- 2 213 477 describes a rubber composition comprising a solution polymerized styrene-butadiene rubber terminally functionalized with an aminosilane compound, and cis-1,4-polybutadiene.

EP-A- 2 182 028 describes a rubber composition comprising polybutadiene modified along its chain. It also describes a rubber composition comprising such a modified polybutadiene together with solution polymerized SBR which is end-modified with an amino group-containing compound.

### Disclosure and Practice of the Invention

The invention relates to a rubber composition in accordance with claim 1 and to a tire in accordance with claim 15.

Dependent claims refer to preferred embodiments of the invention.

Preferably, the rubber composition is used in a tire tread or a tire tread cap.

In accordance with a preferred embodiment of this invention, a pneumatic rubber tire is provided having a component of a rubber composition comprising, based upon parts by weight per 100 parts by weight of rubber (phr):
(A) from 50 to 80 phr of a solution polymerization prepared styrene/butadiene rubber (S-SBR) terminally di-functionalized at one terminal end of said styrene/butadiene rubber with a combination of both alkoxysilane and either and amine or thiol groups, particularly thiol groups, wherein said (S-SBR) has a bound styrene content of:
   (1) from 15 to 34, alternately from 18 to 28, percent bound styrene units (S-SBR-A), or
   (2) from 35 to 45 percent bound styrene units (S-SBR-B), and
(B) from 5 to 70 phr of in-chain functionalized polybutadiene elastomer having a cis 1,4-isomeric content in a range of from 30 to 50 percent, a trans 1,4-isomeric content in a range of from 40 to 60 percent which contains in-chain functionalization comprising from 0.2 to 1.5 weight percent functional groups bound in the polybutadiene polymer chain;
   wherein said in-chain functionalized polybutadiene elastomer comprises a copolymer of in-chain repeat units derived from:
   (1) 1,3-butadiene monomer; and
   (2) functionalized monomer in amount of from 0.2 to 1.5 weight percent of said 1,3-butadiene monomer having a structural formula comprised of Formula (I): 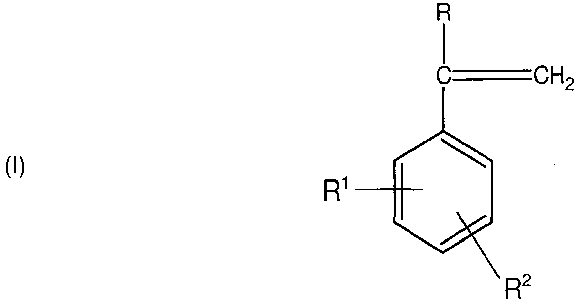 where R represents an alkyl group containing from 1 to 10 carbon atoms or a hydrogen atom and where R¹ and R² are the same or different and represent hydrogen atom, provided that both R¹ and R² cannot be hydrogen, or moiety comprised of Formula (II) or Formula (III): 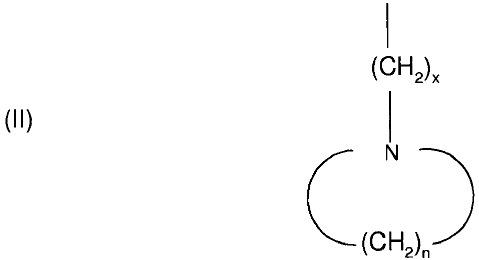 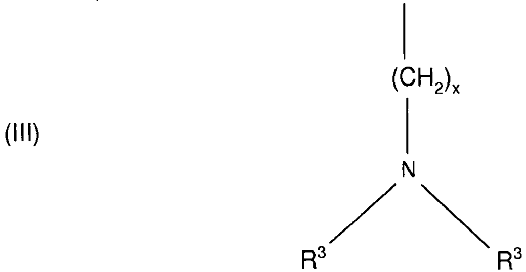 where R³ groups are the same or different and represent alkyl groups containing from 1 to 10 carbon atoms , aryl groups, allyl groups and alkyloxy groups comprised of the structural formula (IV):

      (IV) -(CH₂)_{y}-O-(CH₂)_{z}-CH₂

      where n, x, y and z represent integers ranging from 1 to 10.

In one preferred embodiment, the rubber composition contains 40 to 135, alternately from 50 to 90, phr of a reinforcing filler comprising:
(A) amorphous synthetic precipitated silica (precipitated silica), or
(B) rubber reinforcing carbon black, or
(C) combination of said precipitated silica and rubber reinforcing carbon black where said combination desirably (optionally) comprises said precipitated silica and rubber reinforcing carbon black of a weight ratio in a range of from 1/1 to 10/1.

In one embodiment, said rubber composition contains a coupling agent for the silica (e.g. when said rubber composition contains said silica) having a moiety (e.g. a siloxy moiety) reactive with hydroxyl groups (e.g. silanol groups) on said silica and another moiety interactive with one of said elastomers (e.g. with carbon-carbon double bonds contained in said elastomers).

A representative example of functionalized monomers represented by structural formula (I) is, for example, pyrrolidine ethyl styrene, (PES).

A representative example of functionalized monomers represented by structural formula (I) is, for example, vinyl benzyl pyrrolidine.

A representative example of functionalized monomers represented by structural formula (I) is, for example, vinyl benzyl dimethyl amine.

Accordingly, in one embodiment, the in-chain functionalized polybutadiene may comprise repeat units derived from 1,3-butadiene and at least one of pyrrolidine ethyl styrene, vinyl benzyl dimethyl amine and vinyl benzyl pyrrolidine.

In one embodiment, said polybutadiene copolymer further contains repeat units derived from isoprene where isoprene monomer is copolymerized with said 1,3-butadiene and functionalized monomer(s). Said repeat units of isoprene may, for example, constitute from 2 to 25, alternately from 2 to 15, weight percent of said polybutadiene copolymer.

For example and in one embodiment, said functionalized polybutadiene rubber is a copolymer of 1,3-butadiene and functionalized monomer prepared by anionic copolymerization of the 1,3-butadiene and functional monomers in a hydrocarbon solvent in the presence of a polymerization initiator comprised of n-butyllithium to initiate the copolymerization for which may be added a polymerization modifier to promote incorporation (distribution) of the functional monomer units along the polybutadiene chain such as, for example and not limited to, tetramethylethylenediamine (which may sometimes be referred to as TMEDA).

In one embodiment, as previously indicated, the polybutadiene (prepared by the aforesaid n-butyllithium copolymerization initiator) may comprise a cis 1,4-isomeric content in a range of from 30 to 50 percent, a trans 1,4-isomeric content in a range of from 40 to 60 percent and a vinyl 1,2-content in a range of from 5 to 20 percent with a typical glass transition temperature (Tg) in a range of from -85°C to-95°C. Its number average molecular weight (Mn), may be for example, in a range of from 75,000 to 350,000 and its heterogeneity index of weight average to number average (Mw/Mn) may be in a range, for example, of from 1 to 2.5, alternately from 1.5 to 2.5. For example, see US-B- 6,664,328.

In one embodiment, at least one of said terminal di-functionalized styrene/butadiene elastomer and said in-chain functionalized polybutadiene elastomer is at least partially chain extended with tin tetrachloride or silicon tetrachloride, particularly with tin tetrachloride.

For convenience, polybutadiene rubber prepared by the n-butyllithium initiated polymerization may be referred to herein as "lithium polybutadiene" and functionalized polybutadiene rubber prepared by the n-butyllithium initiated copolymerization may be referred to herein as a "lithium polybutadiene copolymer".

This is in contrast to, and instead of, a polybutadiene prepared by solution polymerization of 1,3-butadiene in the presence of a nickel based polymerization catalyst to form a polybutadiene elastomer from 1,3 butadiene monomer (which might sometimes be referred to as a nickel polybutadiene elastomer) having a microstructure comprising at least 90 percent cis 1,4-isomeric content and having a typical Tg in a range of from -100°C to -110°C. Such nickel polybutadiene elastomer may have, for example, a number average (Mn) in a range of from 230,000 to 250,000 with a heterogeneity index (Mw/Mn) in a range of from 1.5 to 2. For example, see US-B- 7,081,505.

The functional styrene/butadiene rubber is di-functionalized with a combination of alkoxysilane and primary amino or thiol groups, particularly thiol groups, together at the same terminal end of the styrene/butadiene elastomer as being derived from a singular di-functional polymerization terminating compound containing said combination of alkylsilane and primary amino or thiol groups.

The di-functional combination of alkoxysilyl group together with the primary amino group or thiol group, may thereby be bonded, for example, to one terminal end of the styrene/butadiene rubber to form the terminally di-functionalized styrene/butadiene rubber.

The terminally di-functionalized styrene/butadiene rubber may be produced, for example, by polymerizing styrene and butadiene in a hydrocarbon solvent by anionic polymerization using an organic alkali metal and/or an organic alkali earth metal as an initiator, adding a terminating agent compound having an alkoxysilyl group and a primary amino group protected with a protective group or a thiol group protected with a protecting group to act as a polymerization terminating agent with a living polymer chain terminal at the time when the polymerization has substantially completed, and then conducting deblocking, for example, by hydrolysis or other appropriate procedure. In one embodiment, the terminally di-functionalized styrene/butadiene rubber may be produced, for example, in a matter shown in USB- 7,342,070. In another embodiment, the terminally di-functionalized styrene-butadiene rubber may be produced, for example, in a manner shown in WO-A-2007/047943.

In one embodiment, as mentioned in US-B- 7,342,070, the terminally di-functionalized styrene/butadiene rubber may be comprised of the Formula (V): 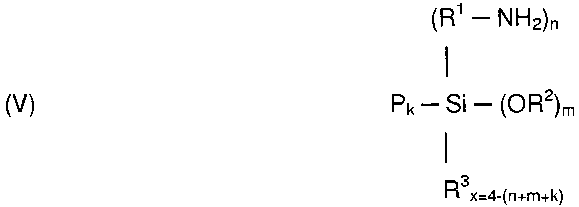 wherein P is a (co)polymer chain of styrene/butadiene copolymer, R¹ is an alkylene group having 1 to 12 carbon atoms, R² and R³ are each independently selected from an alkyl group having 1 to 20 carbon atoms, an allyl group or an aryl group, where R² is preferably an ethyl group, n is a value of 1 or 2, m is a value of from 1 or 2, preferably 2, k is a value of from 1 or 2, x is a value of 0 to 1, with the proviso that n+m+k is an integer of 3 or 4.

The terminating agent compound having a protected primary amino group and an alkoxysilyl group may be any of various compounds containing such groups as are known in the art. In one embodiment, the compound having a protected primary amino group and an alkoxysilyl group may include, for example, N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)-aminoethyltriethoxysilne, N,N-bis(trimethylsilyl)aminoethylmethyldimethoxysilane, N,N-bis(trimethylsilyl)aminoethylmethyldiethoxysilane, etc., and preferred are 1-trimethylsilyl-2,2-dimethoxy-1-aza-2-silacyclopentane, N,N-bis(trimethylsilyl) aminopropylmethyldimethoxysilane and N,N-bis(trimethylsilyl)aminopropylmethyldiethoxysilane. In one embodiment, the compound having a protected primary amino group and an alkoxysilyl group is N,N-bis(trimethylsilyl)aminopropyltriethoxysilane.

For example, styrene-butadiene rubbers terminally di-functionalized with an alkoxysilane group and a primary amine group may be, for example, HPR 355 from Japan Synthetic Rubber (JSR).

Further, and in another embodiment, the solution polymerization prepared styrene-butadiene rubber may be terminally di-functionalized with an alkoxysilane group and a thiol which may comprise, for example, a reaction product of a living anionic styrene/butadiene polymer and a silane-sulfide represented by the formula VI:

(VI) (R⁴O)ₓR⁴_{y}Si-R⁵-S-SiR⁴₃

wherein Si is silicon; S is sulfur; O is oxygen; x is an integer selected from 1, 2 and 3;y is an integer selected from 0, 1, and 2; x+y=3; R⁴ is the same or different and is (C₁-C₁₆) alkyl; and R' is aryl, and alkyl aryl, or (C₁-C₁₆) alkyl. In one embodiment, R⁵ is a (C₁-C₁₆) alkyl. In one embodiment, each R⁴ group is the same or different, and each is independently a C₁-C₅ alkyl, and R⁵ is C₁-C₅ alkyl.

As indicated, in one embodiment the terminal di-functionalized styrene/butadiene rubber is di-functionalized at one terminal end of the styrene/butadiene elastomer with a combination of alkoxysilane and primary amine or thiol groups with a polymerization terminating di-functional compound containing a combination of alkoxysilane and primary amine or thiol groups.

For such embodiment, for example the styrene-butadiene rubber may be terminal di-functionalized with alkoxysilane and thiol groups from, for example, Styron as an alkoxysilane/thiol functionalized SBR as described in WO-A-2007/047943.

For this evaluation, a purpose of inclusion of the in-chain functionalized polybutadiene rubber, instead of non-functionalized polybutadiene rubber, with the terminally di-functionalized styrene/butadiene rubber is to promote reaction of silica with both the functionality of the in-chain functionalized polybutadiene and the terminal di-functionalized styrene/butadiene elastomers, instead of only with the terminally di-functionalized styrene/butadiene elastomer, to create a better dispersion of the silica within and throughout the in-chain functionalized polybutadiene elastomer and thereby in the rubber composition itself. A further purpose is to promote greater abrasion resistance of the rubber composition by promoting a better and more complete dispersion of the silica particles throughout the in-chain functionalized polybutadiene and terminal di-functionalized styrene/butadiene elastomers of the rubber composition which is predictive of better abrasion resistance for the rubber composition and thereby better resistance to treadwear for a tire with such rubber composition.

In addition, an envisioned significant aspect is to create and evaluate miscible (compatible) and immiscible (incompatible) blends of the functionalized elastomers evaluating use of the terminal di-functionalized styrene/butadiene rubber with high a low bound styrene contents.

For such purpose, it is envisioned that the relatively immiscible rubber composition containing the combination of the terminally di-functionalized styrene/butadiene rubber with the high bound styrene content together with the in-chain functionalized polybutadiene rubber may also beneficially promote higher rebound physical property values for the rubber composition which is predictive of less internal heat generation, and therefore less temperature build-up for the rubber composition when it is being worked and predictive of better (lower) rolling resistance for a tire with a tread of such rubber composition.

For such purpose, it is also envisioned that immiscible blends of the elastomers might be created by using the terminally di-functionalized styrene/butadiene with a high bound styrene content, to enhance abrasion resistance for the rubber composition and thereby better resistance to treadwear for a tire having a tread of such rubber composition.

Also, for this evaluation, a purpose of providing the functionalized styrene/butadiene rubber (functionalized SBR) with a significantly lower bound styrene content in a range of, for example, from 15 to 30 or 34 percent of the rubber is to promote its miscibility (compatibility) with the functionalized polybutadiene

The terminal di-functionalized styrene/butadiene rubber (functionalized SBR) with the low bound styrene content, used in combination with the in-chain functionalized polybutadiene may beneficially promote a reduction in rolling resistance as well as tread wear resistance for a tire with tread of such combination of functionalized elastomers although to an expected lesser degree, or extent, than the aforesaid immiscible blend of terminal di-functional functionalized styrene/butadiene and in-chain functionalized polybutadiene elastomers.

In practice, it is appreciated and preferred that the elastomers utilized in the rubber composition are exclusive of polymers and copolymers of isobutylene, including halogen modifications thereof.

Examples of reinforcing carbon blacks for elastomers, generally, together with their Iodine number values and DBP (dibutyl phthalate) absorption values, may be found in The Vanderbilt Rubber Handbook, (1990), 13th edition, Pages 416 through 419.

In the practice of this invention, use of the combinations of the aforesaid silica and rubber reinforcing carbon black reinforcing fillers in the rubber composition is provided to promote better rolling resistance (less rolling resistance) and treadwear resistance for a tire with a tread of such rubber composition which contains such combination of silica and rubber reinforcing carbon black together with the aforesaid combination of functionalized styrene/butadiene and functionalized polybutadiene elastomers.

The precipitated silicas are such as, for example, those obtained by the acidification of a soluble silicate (e.g., sodium silicate or a co-precipitation of a silicate and an aluminate).

The BET surface area of the silica, as measured using nitrogen gas, may, for example, be in a range of 50 to 300, alternatively 120 to 200, square meters per gram.

The silica may also have a dibutylphthalate (DBP) absorption value in a range of, for example, 100 to 400, and usually 150 to 300 cc/g.

Various commercially available silicas may be considered for use in this invention such as, for example only and without limitation, silicas commercially available from PPG Industries under the Hi-Sil trademark with designations 210 and 243; silicas available from Rhodia, with designations of Zeosil 1165MP and Zeosil 165GR and silicas available from Degussa AG with designations VN2, VN3 and 3770GR, and from Huber as Zeopol 8745.

When silica reinforcement is used for a rubber tire tread, the silica is conventionally used with a coupling agent to aid in coupling the precipitated silica to the diene-based elastomers.

Compounds capable of reacting with both the silica surface (e.g. hydroxyl groups on the silica) and the rubber elastomer (e.g. carbon-carbon double bonds in the elastomer) in a manner to cause the silica to have a reinforcing effect on the rubber, many of which are generally known to those skilled in such art as coupling agents, or couplers, are often used. Such coupling agents, for example, may be premixed, or pre-reacted, with the silica particles or added to the rubber mixture during the rubber/silica processing, or mixing, stage. If the coupling agent and silica are added separately to the rubber mix during the rubber/silica mixing, or processing stage, it is considered that the coupling agent then combines in situ with the silica.

In particular, such coupling agents may, for example, be composed of a silane which has a constituent component, or moiety, (the silane portion) capable of reacting with the silica surface and, also, a constituent component, or moiety, capable of reacting with the rubber, particularly a sulfur vulcanizable rubber which contains carbon-to-carbon double bonds, or unsaturation. In this manner, then the coupler acts as a connecting bridge between the silica and the rubber and thereby enhances the rubber reinforcement aspect of the silica.

In one aspect, the silane of the coupling agent apparently forms a bond to the silica surface, possibly through hydrolysis, and the rubber reactive component of the coupling agent combines with carbon-carbon double bonds contained in the rubber itself.

Numerous coupling agents are taught for use in combining silica and rubber such as, for example, silane coupling agents containing a polysulfide component, or structure, such as bis-(3-alkoxysilylalkl) polysulfide which contains an average from 2 to 4 (such as for example a range of from 2 to 2.4 or a range of from 3 to 4) connecting sulfur atoms in its polysulfidic bridge such as, for example, a bis-(3-triethoxysilylpropyl) polysulfide.

It is readily understood by those having skill in the art that the rubber compositions of the tread would be compounded with conventional compounding ingredients including the aforesaid reinforcing fillers such as carbon black and precipitated silica, as hereinbefore defined, in combination with a silica coupling agent, as well as antidegradant(s), processing oil as hereinbefore defined, stearic acid or a zinc stearate, zinc oxide, sulfur-contributing material(s) and vulcanization accelerator(s) as hereinbefore defined.

Antidegradants are typically of the amine or phenolic type. While stearic acid is typically referred to as a rubber compounding ingredient, it may be pointed out that the ingredient itself is usually obtained and used as a mixture of organic acids primarily composed of stearic acid with at least one of oleic acid, linolenic acid and/or palmitic acid normally contained in the stearic acid as typically used. The mixture may contain minor amounts (less than about six weight percent) of myristic acid, arachidic acid and/or arachidonic acid. Such material or mixture is conventionally referred to in the rubber compounding art as stearic acid.

Where normal or typical rubber compounding amounts or ranges of amounts of such additives are used, they are not otherwise considered as a part of the invention. For example, some of the ingredients might be classified, in one aspect, as processing aids. Such processing aids may be, for example, waxes such as microcrystalline and paraffinic waxes typically used in a range of 1 to 5 phr and often in a range of 1 to 3 phr; and resins, usually as tackifiers, such as, for example, synthetic hydrocarbon and natural resins typically used in a range of 1 to 5 phr and often in a range of 1 to 3 phr. A curative might be classified as a combination of sulfur and sulfur cure accelerator(s) for the rubber compound (usually simply referred to as accelerator) or a sulfur donor/accelerator. In a sulfur and accelerator(s) curative, the amount of free sulfur added to the rubber composition, in addition to the sulfur generating bis(3-triethoxysilylpropyl) polysulfide coupling agent, is in a range of 1 to 5 phr and more generally in a range of 2 to 4 phr in order to promote cross-link density of the cured rubber composition; and the accelerator(s), often of the sulfenamide type, may be used, for example, in a range of 0.5 to 5 phr and perhaps in a range of 1 to 2 phr. The ingredients, including the elastomers but exclusive of sulfur and accelerator curatives, are normally first mixed together in at least one and often in a series of at least two sequential, mixing stage(s), although sometimes one mixing stage might be used, to a temperature in a range of 130°C to 140°C, and such mixing stages are typically referred to as non-productive mixing stages. Thereafter, the sulfur and accelerators, and possibly one or more retarders and one or more antidegradants, are mixed therewith to a temperature of 90°C to 120°C and is typically referred as a productive mix stage.

After mixing, the compounded rubber can be fabricated such as, for example, by extrusion through a suitable die to form a tire component such as, for example, a tire tread strip. The tire tread rubber strip is then typically built onto a sulfur curable tire carcass and the assembly thereof shaped and cured in a suitable mold under conditions of elevated temperature and pressure by methods well-known to those having skill in such art.

The invention may be better understood by reference to the following example in which the parts and percentages are by weight unless otherwise indicated.

### EXAMPLE I

Miscible and immiscible blends of elastomers were prepared comprised of terminal di-functional styrene/butadiene elastomers containing about 23 percent and about 40 percent bound styrene, respectively, with polybutadiene and with in-chain functionalized polybutadiene to evaluate resultant rebound and abrasion resistance physical properties.

Two miscible blends of the elastomers were prepared as Control rubber Sample A and Experimental rubber Sample B. For such blends, the terminal di-functional styrene/butadiene elastomer contained about 23 percent bound styrene.

Two immiscible blends of the elastomers were also prepared as Control rubber Sample C and Experimental rubber Sample D. For such blends, the terminal di-functional styrene/butadiene elastomer contained about 40 percent bound styrene.

Various physical properties of the rubber compositions were determined including rebound properties at 23°C and 100°C and tan delta properties at -10°C as well as Grosch abrasion rates.

The basic formulation for the rubber compositions are illustrated in Table 1 in terms of parts by weight per 100 parts rubber (phr) unless otherwise indicated.

The rubber compositions for rubber Samples A and B can be prepared, for example, by mixing the elastomers(s) without sulfur and sulfur cure accelerators in a first non-productive mixing stage (NP-1) in an internal rubber mixer for 4 minutes to a temperature of 170°C. The rubber mixture can then be mixed in a second non-productive mixing stage (NP-2) in an internal rubber mixer for about 4 minutes to a temperature of 160°C with further addition of ingredients. The rubber mixture can then be mixed in a third non-productive mixing stage (NP-3) in an internal rubber mixer for about 4 minutes to a temperature of 150°C without further addition of ingredients. The resulting rubber mixture can then be mixed in a productive mixing stage (PR) in an internal rubber mixer with sulfur and sulfur cure accelerator(s) being added for 2 minutes to a temperature of about 110°C. The rubber composition can be dumped from each mixer and sheeted out and cooled to below 50°C between each of the non-productive mixing steps and prior to the productive mixing step. For rubber Samples C and D a similar mixing procedure can be used where only one non-productive mixing stage is utilized.

**Table 1**

| Material | | Rubber Samples | | |
|---|---|---|---|---|
| Non-productive mixing (NP-1) | Control A | B | Control C | D |
| Functionalized SBR rubber A¹ | 70 | 70 | 0 | 0 |
| Functionalized SBR rubber B² | 0 | 0 | 70 | 70 |
| Polybutadiene rubber (lithium polybutadiene)³ | 0 | 0 | 30 | 0 |
| Functionalized polybutadiene rubber (lithium polybutadiene copolymer)⁴ | 0 | 0 | 0 | 30 |
| Microcrystalline wax | 1.5 | 1.5 | 1.5 | 1.5 |
| Fatty acid⁵ | 2 | 2 | 2 | 2 |
| Rubber processing oil | 11 | 11 | 20 | 20 |
| Zinc oxide | 3.5 | 3.5 | 3.5 | 3.5 |
| Precipitated silcia⁶ | 33 | 33 | 65 | 65 |
| Coupling agent⁷ | 0 | 0 | 10 | 10 |
| Antidegradant | 0 | 0 | 2 | 2 |
| | | | | |

| Non-productive mixing (NP-2) | | | | |
|---|---|---|---|---|
| Polybutadiene rubber (lithium polybutadiene)³ Functionalized polybutadiene rubber | 30 | 0 | 0 | 0 |
| (lithium polybutadiene copolymer)⁴ | 0 | 30 | 0 | 0 |
| Antidegradant | 2 | 2 | 0 | 0 |
| Rubber processing oil | 9 | 9 | 0 | 0 |
| Precipitated silica⁶ | 32 | 32 | 0 | 0 |
| Coupling agent⁷ | 10 | 10 | 0 | 0 |
| | | | | |

| Non-productive mixing (NP-3) | | | | |
|---|---|---|---|---|
| No ingredients added | | | | |

| Productive mixing (PR) | | | | |
|---|---|---|---|---|
| Sulfur | 1.7 | 1.2 | 1.7 | 1.2 |
| Sulfur cure accelerators (A)⁸ | 3 | 0 | 3 | 0 |
| Sulfur cure accelerators (B)⁹ | 0 | 2 | 0 | 2 |
| Antidegradant | 0.8 | 0.8 | 0.8 | 0.8 |

¹Functionalized SBR as a solution polymerization prepared styrene/butadiene rubber having a bound styrene content of about 23 percent functionalized with alkoxysilane and thiol groups and having a Tg in a range of from -30° to -10°C as SLR SE4602™ from Styron

²Functionalized SBR as a solution polymerization prepared styrene/butadiene rubber having a bound styrene content of about 40 percent functionalized alkoxysilane and thiol groups and having a Tg in a range of from -30° to -40°C as P6204M™ from Styron

³Lithium polybutadiene as a polybutadiene prepared by polymerizing 1,3-butadiene with n-butyllithium initiated polymerization having a microstructure comprising 30 to 50 percent cis 1,4-isomeric units, 40 to 60 percent trans 1,4-isomeric units and having from a 5 to 20 percent vinyl 1,2-content; a number average molecular weight (Mn) in a range of from 75,000 to 350,000 with a heterogeneity index (Mw/Mn) in a range of from 1 to 2.5 and having a Tg in a range of from -85 to -95°C

⁴Lithium polybutadiene copolymer as an in-chain functionalized polybutadiene prepared by n-butyllithium initiated copolymerization of 1,3-butadiene and pyrrolidine ethyl styrene (PES) in the presence of TMEDA with the copolymer containing about 0.5 percent repeat units derived from the pyrrolidine ethyl styrene

⁵Fatty acid compromised primarily of a combination of stearic acid, oleic and palmitic acids

⁶As Zeosil 1165 MP™ from Rhodia

⁷A 50/50 (by weight) composite of carbon black and bis-(3-triethoxysilylpropyl) polysulfide having an average in a range of from 2 to 3 connecting sulfur atoms in its polysulfidic bridge from Evonic as Si266™ and reported in the Table as the composite.

⁸Sulfur cure accelerators as a combination of N-N-dicyclohexyl-2-benzothiazolesulfenamide primary accelerator and (amine-containing) diphenylguanidine secondary accelerator in about a 75/50 ratio.

⁹Sulfur cure accelerators as a combination of N-N-dicyclohexyl-2-benzothiazolesulfenamide primary accelerator and zinc dibenzyldithiocarbamate secondary accelerator in about a 50/50 ratio. Such sulfur cure ingredients are therefore comprised of sulfur, primary sulfur cure accelerator comprised of N-N-dicyclohexyl-2-benzothiazolesulfenamide and secondary sulfur cure accelerator comprised of zinc dibenzyldithiocarbamate exclusive of diphenylguanidine. Therefore, in one embodiment, said rubber composition contains sulfur cure ingredients comprised of sulfur and sulfur cure accelerator(s) exclusive of diphenylguanidine.

The prepared rubber compositions were cured at a temperature of 160°C for 14 minutes, where appropriate, and the resulting cured rubber samples evaluated with various physical properties (rounded numbers are reported herein) reported in Table 2.

**Table 2**

| Material | Control A | Exp'l B | Control C | Exp'l D |
|---|---|---|---|---|
| Functionalized SBR rubber A (23% styrene) | 70 | 70 | 0 | 0 |
| Functionalized SBR rubber B (40% styrene) | 0 | 0 | 70 | 70 |
| Polybutadiene rubber (lithium polybutadiene) Functionalized polybutadiene rubber (lithium | 30 | 0 | 30 | 0 |
| polybutadiene copolymer) | 0 | 30 | 0 | 30 |
| Sulfur cure accelerators (A) | Yes | No | Yes | No |
| Sulfur cure accelerators (B) | No | Yes | No | Yes |
| | | | | |
| Properties Miscibility of Elastomers^{A} | Yes | Yes | No | No |
| | | | | |
| RPA¹ | | | | |
| Uncured G', 0.83 Hz, 100°C, 15% strain (MPa) | 0.29 | 0.39 | 0.28 | 0.36 |
| Cured G', 11 Hz, 40°C, 1% strain (MPa) | 5.4 | 4.6 | 5.6 | 3.0 |
| Tan delta, 11 Hz, 40°C, 1% strain | 0.1 | 0.08 | 0.12 | 0.1 |
| | | | | |
| ATS², stress-strain | | | | |
| Tensile strength (MPa) | 15.6 | 18.1 | 18.6 | 22 |
| Elongation at break (%) | 516 | 506 | 534 | 548 |
| 300% modulus, ring, (MPa) | 7.9 | 9.5 | 10.2 | 10.5 |
| | | | | |
| Tan delta at -10°C | 0.27 | 0.22 | 0.37 | 0.38 |
| | | | | |
| Rebound value (Zwick) | | | | |
| 0°C | 18.6 | 23.8 | 14.1 | 18.9 |
| 23°C | 40.2 | 51.1 | 36.2 | 47.2 |
| 100 °C | 57.2 | 61.7 | 58.3 | 63 |
| | | | | |
| Abrasion rate (mg/km), Grosch (lower is better)³ | | | | |
| Medium (40N), 6° slip angle, speed = 20 km/hr, | | | | |
| distance = 1,000 meters | 154 | 145 | 123 | 109 |

| | | | | |
|---|---|---|---|---|
| ^{A}Miscibility (compatibility) of the elastomers is represented by a graph of tan delta versus temperature (temperature sweep of tan delta values) for the blend of the elastomers over a temperature range of -110°C to +60°C where the presence of a single significant peak in this temperature range is indicative of a miscible rubber blend and the presence of dual significant peaks (the dual peaks individually showing the presence of each of the two elastomers) is indicative of an immiscible rubber blend. Such indication of miscibility or immiscibility of rubber blends is recognized by those having skill in such art and is reported in Table 2 as being Yes for Miscibility of the elastomers and as No for Immiscibility of the elastomers. ¹Rubber process analyzer instrument (e.g. Rubber Process Analyzer RPA 2000) ²Automated Testing System instrument by Instron for determining ultimate tensile strength, ultimate elongation, modulii, etc, of rubber samples ³The Grosch abrasion rate run on a LAT-100 Abrader and is measured in terms of mg/km of rubber abraded away. The test rubber sample is placed at a slip angle under constant load (Newtons) as it traverses a given distance on a rotating abrasive disk (disk from HB Schleifmittel GmbH). Frictional forces, both lateral and circumferential, generated by the abrading sample can be measured together with the load (Newtons) using a custom tri-axial load cell. The surface temperature of the abrading wheel is monitored during testing and reported as an average temperature. In practice, a Low abrasion severity test may be run, for example, at a load of 20 Newtons at a slip angle of 2 degrees and a disk speed of 20 or 40 kph (kilometers per hour) at a sample travel of 7,500 m. A Medium abrasion severity test may be run, for example, at a load of 40 Newtons at a slip angle of 6 degrees and a disk speed of 20 kph and a sample travel of 1,000 m. A High abrasion severity test may be run, for example, at a load of 70 Newtons at a slip angle of 12 degrees and a disk speed of 20 kph and a sample travel of 250 m. | | | | |

### (A) For Miscible Elastomer Blends as Control Rubber Sample A and Experimental Rubber Sample B reported in Table 2

Rubber Samples A and B both contained the terminal di-functional styrene/butadiene elastomer with 23 percent bound styrene.

Control rubber Sample A contained non functionalized lithium polybutadiene elastomer.

Experimental rubber Sample B contained in-chain functionalized lithium polybutadiene copolymer.

From Table 2 it is seen that the rebound value (23°C) for Experimental rubber Sample B with the in-chain functionalized polybutadiene significantly increased to a value of 51.1 as compared to a value of 40.2 for its Control rubber Sample A with a non-functionalized lithium polybutadiene.

From Table 2 it can further be seen that the Grosch rate of abrasion for rubber Sample B which contained the in-chain functionalized polybutadiene decreased (improved) to a value of 145 mg/km as compared to a value of 154 mg/km for its Control rubber Sample A with a non-functionalized lithium polybutadiene.

From Table 2 it is seen that the tan delta value (-10°C) for Experimental rubber Sample B with the in-chain functionalized polybutadiene significantly decreased to a value of 0.22 as compared to a value of 0.27 for its Control rubber Sample A with a non-functionalized lithium polybutadiene.

It is concluded that the presence of the in-chain functionalized polybutadiene enabled a more uniform dispersion of the precipitated silica throughout the rubber composition, instead of being primarily concentrated in the low bound styrene-containing terminal di-functionalized styrene/butadiene portion of the rubber composition which led to:
(1) beneficially improved (increased) rebound value (at 23°C) which is indicative of beneficially decreased hysteresis with predictive reduced internal heat build-up of a tire component during service of the tire and predictive beneficial reduced rolling resistance for a tire having a component (e.g. tread) of such rubber composition;
(2) beneficially improved (reduced) Grosch abrasion rate which is predictive of increased resistance to treadwear for a tire having a tread of such rubber composition, and
(3) similar tan delta (-10°C) values which is indicative that wet traction of a tire tread of such composition would be similar.

### (B) For Immiscible Elastomer Blends as Control Rubber Sample C and Experimental Rubber Sample D reported in Table 2

Rubber Samples C and D both contained the terminal di-functional styrene/butadiene elastomer with 40 percent bound styrene.

Control rubber Sample C contained non functionalized lithium polybutadiene elastomer.

Experimental rubber Sample D contained in-chain functionalized lithium polybutadiene copolymer.

From Table 2 it is seen that the rebound value (23°C) for Experimental rubber Sample D with the in-chain functionalized polybutadiene significantly increased to a value of 47.2 as compared to a value of 36.2 for its Control rubber Sample C with a non-functionalized lithium polybutadiene.

From Table 2 it can further be seen that the Grosch rate of abrasion for rubber Sample D which contained the in-chain functionalized polybutadiene significantly decreased (improved) to a value of 109 mg/km as compared to a value of 123 mg/km for its Control rubber Sample C with a non-functionalized lithium polybutadiene.

From Table 2 it is seen that the tan delta value (-10°C) of 0.38 for Experimental rubber Sample D with the in-chain functionalized polybutadiene was about the same the tan delta value of 0.37 for its Control rubber Sample A with a non-functionalized lithium polybutadiene.

It is concluded that the presence of the in-chain functionalized polybutadiene enabled a more uniform dispersion of the precipitated silica throughout the rubber composition, instead of being primarily concentrated in the high bound styrene-containing terminal di-functionalized styrene/butadiene portion of the rubber composition which led to:
(A) significantly beneficially improved (increased) rebound value (at 23°C) which is indicative of a significantly beneficially reduced hysteresis with predictive reduced internal heat build-up of a tire component during service of the tire and predictive beneficial reduced rolling resistance for a tire having a component (e.g. tread) of such rubber composition;
(B) significantly beneficially improved (reduced) Grosch abrasion rate which is predictive of a significantly increased resistance to treadwear for a tire having a tread of such rubber composition, and
(C) similar tan delta (-10°C) values which is indicative that wet traction of a tire tread of such composition would be substantially maintained.

### EXAMPLE II

Vehicular tires were prepared of tire size P225/60R16 having treads comprising rubber compositions represented by Samples A, B, C and D of Example I and tested for tire rolling resistance, treadwear and tread traction (stopping distance) with results reported in the following Table 3.

Tires A and B used treads comprising a miscible blend of elastomers (Samples) A and B, respectively, which were comprised of a miscible blend of the terminal di-functionalized SBR containing about 23 percent bound styrene together with the in-chain functionalized polybutadiene for Experimental Tire B and non-functionalized polybutadiene for Control Tire A.

Tires C and D used treads comprising immiscible blend of elastomers (Samples) C and D, respectively, which were comprised of an immiscible blend of the terminal di-functionalized SBR containing about 40 percent bound styrene and the in-chain functionalized polybutadiene for Experimental Tire D and the non-functionalized polybutadiene for Control Tire C.

**Table 3**

| | | Tires | | |
|---|---|---|---|---|
| | A | B | C | D |
| Functionalized SBR rubber A (23 % styrene) | 70 | 70 | 0 | 0 |
| Functionalized SBR rubber B (40 % styrene) | 0 | 0 | 70 | 70 |
| Polybutadiene rubber (lithium polybutadiene) | 30 | 0 | 30 | 0 |
| Functionalized polybutadiene rubber (lithium polybutadiene copolymer) | 0 | 30 | 0 | 30 |
| | | | | |
| Miscibility of elastomers | Yes | Yes | No | No |
| | | | | |
| The values below are normalized to a value of 100 for Control Tire A (with Tread of Miscible Elastomer Blend) and for Control Tire C (with Tread of Immiscible | | | | |
| Elastomer Blend) | | | | |
| Tread Rolling Resistance - higher value is better (representing lower rolling resistance) | 100 | 109 | 100 | 114 |
| Wet Stopping Distance (car test) - higher value is better (representing shorter stopping distance) | 100 | 96 | 100 | 100 |
| Wet Traction (trailer test) - higher value is better (representing greater traction) | 100 | 97 | 100 | 102 |
| Dry Traction (trailer test) - higher value is better (representing greater traction) | 100 | 99 | 100 | 103 |
| Treadwear - higher value is better (representing greater resistance to treadwear) | 100 | 119 | 100 | 115 |

It can be seen from Table 3 that both rolling resistance and tread wear values were significantly and beneficially improved with the addition of the in-chain functionalized polybutadiene to the terminal di-functionalized styrene/butadiene rubber of the silica reinforcement-containing rubber compositions for Tires (treads) B and D without significantly effecting their wet traction as compared to their individually associated comparative Control tires A and C, respectively which did not contain the ion-chain functionalized polybutadiene rubber.

For comparison of use of the immiscible blend and miscible blends of the functionalized polybutadiene and functionalized styrene/butadiene rubber in the silica reinforcement containing rubber composition for the tire tread, it is observed that:
(A) A significant advantage in performance is observed, particularly for tire Rolling Resistance and Treadwear resistance, for Tire D with its tread comprised of an immiscible blend of in-chain functionalized polybutadiene and terminal di-functionalized styrene/butadiene (B) containing 40 percent bound styrene.
(B) A beneficial increase, but somewhat less of a significant advantage, in tire performance, particularly for tire Rolling Resistance and Treadwear resistance, as observed for Tire B with its tread comprised of a miscible blend of the in-chain functionalized polybutadiene and terminal di-functionalized styrene/butadiene (A) containing 23 percent bound styrene.

## Claims

1. A rubber composition comprising, based upon parts by weight per 100 parts by weight of rubber (phr):
(A) from 50 to 80 phr of a solution polymerization prepared styrene/butadiene rubber (S-SBR) terminally di-functionalized at one terminal end of the styrene/butadiene rubber with a combination of both alkoxysilane and either amine or thiol groups, wherein the S-SBR has a bound styrene content of:
(1) from 15 to 34 percent bound styrene units, or
(2) from 35 to 45 percent bound styrene units, and
(B) from 5 to 70 phr of an in-chain functionalized polybutadiene elastomer with a having a cis 1,4-isomeric content in a range of from 30 to 50 percent and a trans 1,4-isomeric content in a range of from 40 to 60 percent, which contains in-chain functionalization comprising from 0.2 to 1.5 weight percent functional groups bound in the polybutadiene polymer chain;
wherein the in-chain functionalized polybutadiene elastomer comprises a copolymer of in-chain repeat units derived from:
(1) 1,3-butadiene monomer; and
(2) functionalized monomer in amount of from 0.2 to 1.5 weight percent of the 1,3-butadiene monomer having a structural formula (I): 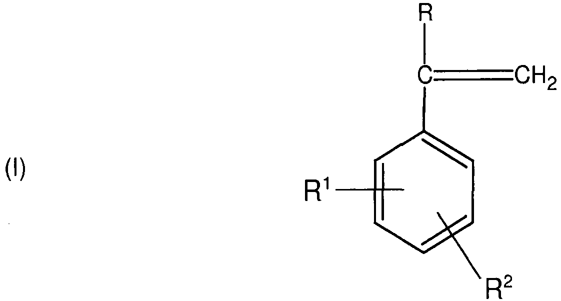 where R represents an alkyl group containing of from 1 to 10 carbon atoms or a hydrogen atom and where R¹ and R² are the same or different and represent a hydrogen atom, provided that both R¹ and R² cannot be hydrogen, or a moiety of formula (II) or formula (III): 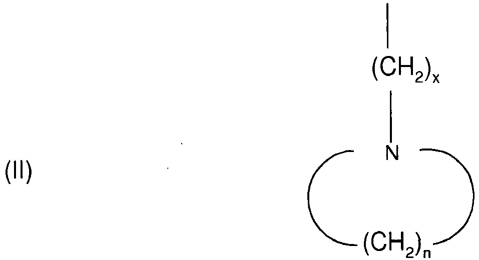 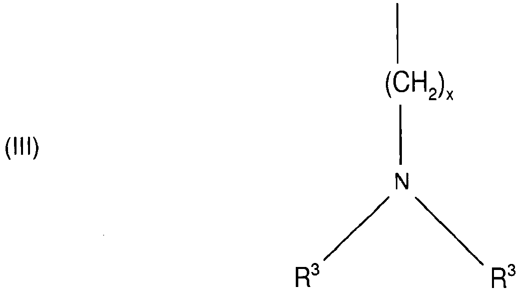 where R³ groups are the same or different and represent alkyl groups containing from of 1 to 10 carbon atoms, aryl groups, allyl groups or alkyloxy groups of the structural formula (IV):
(IV) -(CH₂)_{y}-O-(CH₂)_{z}-CH₂
where n, x, y and z represent integers ranging of from 1 to 10.

2. The rubber composition of claim 1 comprising 40 to 135 phr of a reinforcing filler comprising:
(A) silica such as amorphous synthetic precipitated silica, or
(B) a rubber reinforcing carbon black, or
(C) a combination of the silica and the rubber reinforcing carbon black, preferably in a weight ratio in a range of from 1/1 to 10/1.

3. The rubber composition of claim 2 comprising a coupling agent for the silica having a moiety reactive with hydroxyl groups on the silica and another moiety interactive with at least one of the elastomers.

4. The rubber composition of at least one of the previous claims wherein the functionalized monomer represented by structural formula (I) is pyrrolidine ethyl styrene, vinyl benzyl pyrrolidine or vinyl benzyl dimethyl amine.

5. The rubber composition of at least one of the previous claims wherein the in-chain functionalized polybutadiene comprises repeat units derived from 1,3-butadiene and at least one of pyrrolidine ethyl styrene, vinyl benzyl dimethyl amine and vinyl benzyl pyrrolidine.

6. The rubber composition of at least one of the previous claims wherein the in-chain functionalized polybutadiene copolymer further contains from 2 to 25 percent repeat units derived from isoprene.

7. The rubber composition of at least one of the previous claims wherein the in-chain functionalized polybutadiene rubber is a copolymer of 1,3-butadiene and functionalized monomer prepared by anionic copolymerization of the 1,3-butadiene and functional monomers in a hydrocarbon solvent in the presence of a polymerization initiator comprising n-butyllithium to initiate the copolymerization for which is added a polymerization modifier to promote incorporation of the functional monomer units along the polybutadiene chain comprising tetramethylethylene-diamine.

8. The rubber composition of at least one of the previous claims wherein the terminal di-functionalized styrene/butadiene elastomer is styrene/butadiene elastomer containing terminal functionalization comprising a combination of alkoxysilane and primary amino groups or a combination of alkoxysilane and thiol groups.

9. The rubber composition of at least one of the previous claims wherein the terminal di-functionalized styrene/butadiene elastomer is at least partially chain extended with tin tetrachloride or silicon tetrachloride.

10. The rubber composition of at least one of the previous claims wherein the in-chain functionalized polybutadiene elastomer is at least partially chain extended with tin tetrachloride or silicon tetrachloride.

11. The rubber composition of at least one of the previous claims wherein the terminal di-functionalized styrene/butadiene rubber is of the Formula (V): 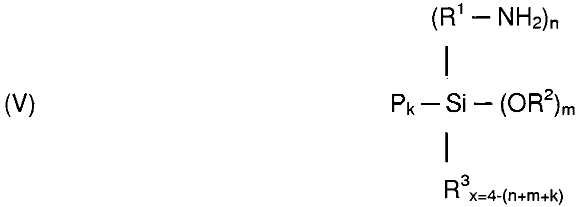 wherein P is a copolymer chain of styrene/butadiene copolymer, R¹ is an alkylene group having 1 to 12 carbon atoms, R² and R³ are each independently selected from an alkyl group having of from 1 to 20 carbon atoms, an allyl group or an aryl group, where R² is preferably an ethyl group, n is a value of 1 or 2, m is a value of from 1 or 2, preferably 2, k is a value of from 1 or 2, x is a value of 0 to 1, with the proviso that n+m+k is an integer of 3 or 4.

12. The rubber composition of at least one of the previous claims wherein the terminal di-functionalized styrene/butadiene rubber is terminally di-functionalized with an alkoxysilane group and a thiol as a reaction product of a living anionic styrene/butadiene polymer and a silane-sulfide represented by the formula VI:
(VI) (R⁴O)ₓR⁴_{y}Si-R⁵-S-SiR⁴₃
wherein Si is silicon; S is sulfur; O is oxygen; x is an integer selected from 1, 2 and 3; y is an integer selected from 0, 1, and 2; x+y=3; R⁴ is the same or different and is a (C₁-C₁₆) alkyl, preferably a C₁-C₅ alkyl; and R⁵ is aryl, alkyl aryl, or a (C₁-C₁₆) alkyl, preferably a C₁-C₅ alkyl.

13. The rubber composition of at least one of the previous claims wherein the terminal di-functional styrene/butadiene elastomer contains from 18 to 28 percent bound styrene units.

14. The rubber composition of at least one of the previous claims wherein the rubber composition contains sulfur cure ingredients comprising sulfur, a primary sulfur cure accelerator comprising N-N-dicyclohexyl-2-benzothiazolesulfenamide and a secondary sulfur cure accelerator comprising zinc dibenzyldithiocarbamate exclusive of diphenyl guanidine; or wherein the rubber composition contains sulfur cure ingredients comprising sulfur and sulfur cure accelerator(s) exclusive of diphenylguanidine.

15. A tire having a component comprising the rubber composition in accordance with at least one of the previous claims.

## Patentansprüche

1. Kautschukzusammensetzung, umfassend, auf Basis von Gewichtsteilen je 100 Gewichtsteile Kautschuk (ThK):
(A) 50 bis 80 ThK eines durch Lösungspolymerisation hergestellten Styrol-Butadien-Kautschuks (S-SBR), der an einem Ende des Styrol-Butadien-Kautschuks endständig difunktionalisiert ist mit einer Kombination von sowohl Alkoxysilan als auch entweder Amin- oder Thiol-Gruppen, wobei das S-SBR einen Gehalt an gebundenem Styrol aufweist von:
(1) 15 bis 34 Prozent gebundenen Styroleinheiten, oder
(2) 35 bis 45 Prozent gebundenen Styroleinheiten, und
(B) 5 bis 70 ThK eines in der Kette funktionalisierten Polybutadienelastomers mit einem cis-1,4-Isomergehalt im Bereich von 30 bis 50 Prozent und einem trans-Isomergehalt im Bereich von 40 bis 60 Prozent, das Funktionalisierung in der Kette enthält, umfassend 0,2 bis 1,5 Gewichtsprozent an funktionellen Gruppen, die in der Polybutadienpolymerkette gebunden sind;
wobei das in der Kette funktionalisierte Polybutadienelastomer ein Copolymer aus in-Ketten-Repetiereinheiten umfasst, abgeleitet von:
(1) 1,3-Butadienmonomer; und
(2) funktionalisiertem Monomer in einer Menge von 0,2 bis 1,5 Gewichtsprozent des 1,3-Butadienmonomers mit einer Strukturformel (I): 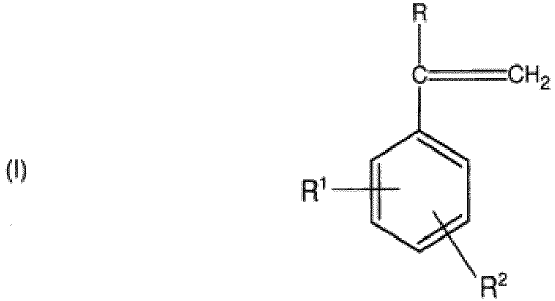 wobei R eine Alkylgruppe darstellt, die 1 bis 10 Kohlenstoffatome oder ein Wasserstoffatom enthält, und wobei R¹ und R² dieselben oder verschieden sind und ein Wasserstoffatom darstellen, mit der Vorgabe, dass nicht sowohl R¹ als auch R² Wasserstoff sein können, oder ein Anteil der Formel (II) oder Formel (III): 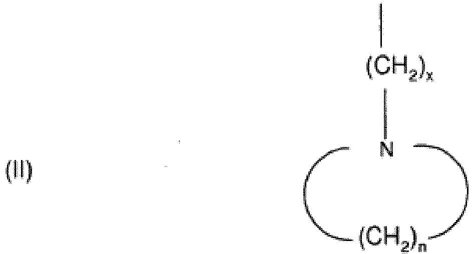 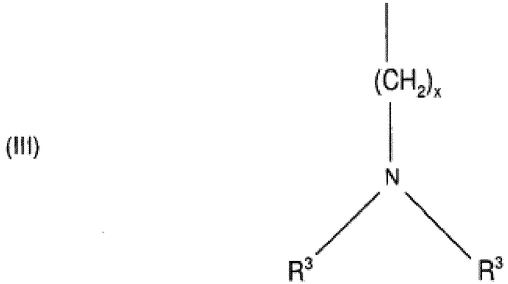 wobei R³-Gruppen dieselben oder verschieden sind und Alkylgruppen darstellen, die 1 bis 10 Kohlenstoffatome enthalten, Arylgruppen, Allylgruppen oder Alkyloxygruppen mit der Strukturformel (IV):
(IV) -(CH₂)_{y}-O-(CH₂)_{z}-CH₂
wobei n, x, y und z ganze Zahlen im Bereich von 1 bis 10 darstellen.

2. Kautschukzusammensetzung nach Anspruch 1, umfassend 40 bis 135 ThK eines Verstärkungsfüllstoffs, umfassend:
(A) Silika, wie etwa amorphes synthetisches ausgefälltes Silika, oder
(B) ein Kautschukverstärkungs-Carbon Black, oder
(C) eine Kombination des Silikas und des Kautschukverstärkungs-Carbon Blacks, bevorzugt in einem Gewichtsverhältnis im Bereich von 1:1 bis 10:1.

3. Kautschukzusammensetzung nach Anspruch 2, umfassend einen Haftvermittler für das Silika mit einem Anteil, der mit Hydroxylgruppen auf dem Silika reaktiv ist, und einem anderen Anteil, der mit mindestens einem der Elastomere in Wechselwirkung tritt.

4. Kautschukzusammensetzung nach mindestens einem der vorhergehenden Ansprüche, wobei das durch die Strukturformel (I) dargestellte funktionalisierte Monomer Pyrrolidinetherstyrol, Vinylbenzylpyrrolidin oder Vinylbenzyldimethylamin ist.

5. Kautschukzusammensetzung nach mindestens einem der vorhergehenden Ansprüche, wobei das in der Kette funktionalisierte Polybutadien Repetiereinheiten umfasst, die von 1,3-Butadien und mindestens einem von Pyrrolidinethylstyrol, Vinylbenzyldimethylamin und Vinylbenzylpyrrolidin abgeleitet sind.

6. Kautschukzusammensetzung nach mindestens einem der vorhergehenden Ansprüche, wobei das in der Kette funktionalisierte Polybutadiencopolymer weiter 2 bis 25 Prozent von Isopren abgeleitete Repetiereinheiten enthält.

7. Kautschukzusammensetzung nach mindestens einem der vorhergehenden Ansprüche, wobei der in der Kette funktionalisierte Polybutadienkautschuk ein Copolymer von 1,3-Butadien und funktionalisiertem Monomer ist, hergestellt durch anionische Copolymerisation des 1,3-Butadiens und funktioneller Monomere in einem Kohlenwasserstofflösungsmittel in Gegenwart eines n-Butyllithium umfassenden Polymerisationsinitiators, um die Copolymerisation zu initiieren, wofür ein Tetramethylethylendiamin umfassender Polymerisationsmodifikator zugesetzt wird, um die Eingliederung der funktionellen Monomereinheiten entlang der Polybutadienkette zu fördern.

8. Kautschukzusammensetzung nach mindestens einem der vorhergehenden Ansprüche, wobei das endständig difunktionalisierte Styrol-Butadien-Elastomer Styrol-Butadien-Elastomer ist, das endständige Funktionalisierung enthält, umfassend eine Kombination von Alkoxysilan und primären Aminogruppen oder eine Kombination von Alkoxysilan und Thiolgruppen.

9. Kautschukzusammensetzung nach mindestens einem der vorhergehenden Ansprüche, wobei das endständig difunktionalisierte Styrol-Butadien-Elastomer mindestens teilweise mit Zinntetrachlorid oder Siliziumtetrachlorid kettenverlängert ist.

10. Kautschukzusammensetzung nach mindestens einem der vorhergehenden Ansprüche, wobei das in der Kette funktionalisierte Polybutadienelastomer mindestens teilweise mit Zinntetrachlorid oder Siliziumtetrachlorid kettenverlängert ist.

11. Kautschukzusammensetzung nach mindestens einem der vorhergehenden Ansprüche, wobei der endständig difunktionalisierte Styrol-Butadien-Kautschuk die Formel (V) aufweist: 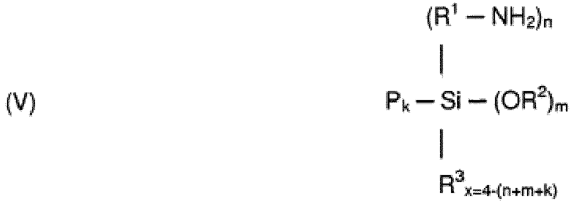 wobei P eine Copolymerkette von Styrol-Butadien-Copolymer ist, R¹ eine Alkylengruppe mit 1 bis 12 Kohlenstoffatomen ist, R² und R³ jedes unabhängig aus einer Alkylgruppe ausgewählt sind, die 1 bis 20 Kohlenstoffatome aufweist, einer Allylgruppe oder einer Arylgruppe, wobei R² bevorzugt eine Ethylgruppe ist, n ein Wert von 1 oder 2 ist, m ein Wert von 1 oder 2 ist, bevorzugt 2; k ein Wert von 1 oder 2 ist, x ein Wert von 0 bis 1 ist, mit dem Vorbehalt, dass n+m+k eine ganze Zahl von 3 oder 4 ist.

12. Kautschukzusammensetzung nach mindestens einem der vorhergehenden Ansprüche, wobei der endständig difunktionalisierte Styrol-Butadien-Kautschuk endständig difunktionalisiert ist mit einer Alkoxysilangruppe und einem Thiol als ein Reaktionsprodukt eines lebenden anionischen Styrol-Butadien-Polymers und eines Silansulfids, dargestellt durch die Formel VI:
(VI) (R⁴O)ₓR⁴_{y}Si-R⁵-S-SiR⁴₃
wobei Si Silizium ist; S Schwefel ist; O Sauerstoff ist; x eine ganze Zahl ist, ausgewählt aus 1, 2 und 3; y eine ganze Zahl ist, ausgewählt aus 0, 1 und 2; x+y=3; R⁴ dasselbe oder verschieden ist und ein (C₁-C₁₆)-Alkyl, bevorzugt ein C₁-C₅-Alkyl, ist; und R⁵ Aryl, Alkylaryl oder ein (C₁-C₁₆)-Alkyl, bevorzugt ein C₁-C₅-Alkyl, ist.

13. Kautschukzusammensetzung nach mindestens einem der vorhergehenden Ansprüche, wobei das endständig difunktionalisierte Styrol-Butadien-Elastomer 18 bis 28 Prozent gebundene Styroleinheiten enthält.

14. Kautschukzusammensetzung nach mindestens einem der vorhergehenden Ansprüche, wobei die Kautschukzusammensetzung Schwefelvulkanisationsbestandteile enthält, umfassend Schwefel, einen primären Schwefelvulkanisationsbeschleuniger, umfassend N-N-Dicylohexyl-2-benzothiazolsulfenamid, und einen sekundären Schwefelvulkanisationsbeschleuniger, umfassend Zinkdibenzyldithiocarbamat unter Ausschluss von Diphenylguanidin; oder wobei die Kautschukzusammensetzung Schwefelvulkanisationsbestandteile enthält, umfassend Schwefel und einen oder mehrere Schwefelvulkanisationsbeschleuniger unter Ausschluss von Diphenylguanidin.

15. Reifen, der ein Bauteil aufweist, das die Kautschukzusammensetzung gemäß mindestens einem der vorhergehenden Ansprüche umfasst.

## Revendications

1. Composition de caoutchouc comprenant, basées sur des parties en poids par 100 parties en poids de caoutchouc (phr) :
(A) de 50 à 80 phr d'un caoutchouc de styrène/butadiène préparé par polymérisation en solution (S-SBR) possédant une double fonctionnalité à une extrémité terminale du caoutchouc de styrène/butadiène avec une combinaison d'un alcoxysilane et, soit de groupes amines, soit de groupes thiols, le caoutchouc S-SBR possédant une teneur en styrène lié de :
(1) de 15 à 35 % d'unités de styrène lié ; ou
(2) de 35 à 45 % d'unités de styrène lié ; et
(B) de 5 à 70 phr d'un élastomère de polybutadiène possédant une fonctionnalité intracaténaire, comprenant une teneur en isomère 1-4 cis dans la plage de 30 à 50 % et une teneur en isomère 1-4 trans dans la plage de 40 à 60 %, qui contient une fonctionnalisation intracaténaire comprenant à concurrence de 0,2 à 1,5 % en poids des groupes fonctionnels liés dans la chaîne du polymère de polybutadiène ;
dans laquelle l'élastomère de polybutadiène à fonctionnalité intracaténaire comprend un copolymère d'unités de répétition intracaténaires qui dérivent de :
(1) un monomère de 1,3-butadiène ; et
(2) un monomère fonctionnalisé en une quantité qui représente de 0,2 à 1,5 % poids du monomère de 1,3-butadiène, répondant à la formule développée (I) : 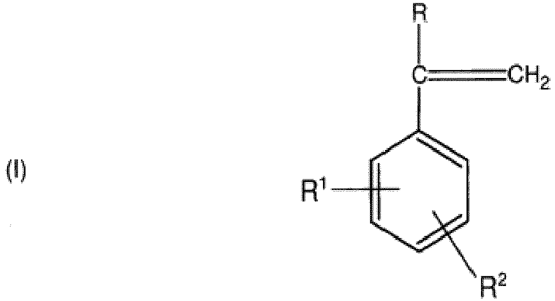
dans laquelle R représente un groupe alkyle contenant de 1 à 10 atomes de carbone ou un atome d'hydrogène, et dans laquelle R¹ et R² sont identiques ou différents et représentent un atome d'hydrogène, avec cette condition que les deux groupes R¹ et R² ne peuvent pas représenter un atome d'hydrogène, ou une fraction répondant à la formule (II) ou à la formule (III) : 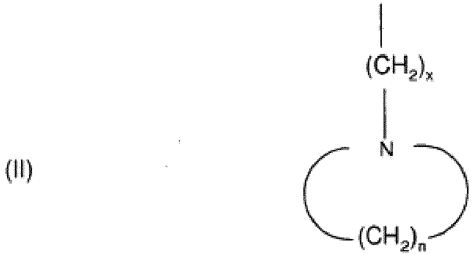 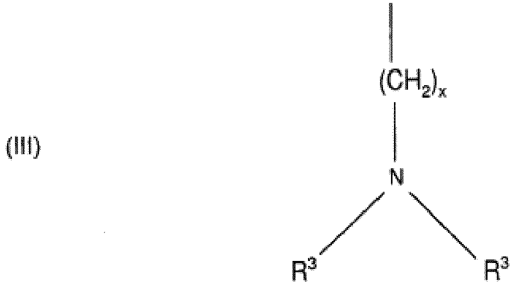 dans laquelle les groupes R³ sont identiques ou différents et représentent des groupes alkyle contenant de 1 à 10 atomes de carbone, des groupes aryle, des groupes allyle ou des groupes alkyloxy répondant à la formule développée (IV) :
(IV) -(CH₂)_{y}-O-(CH₂)_{z}-CH₂
dans laquelle n, x, y et z représentent des entiers qui se situent dans la plage de 1 à 10.

2. Composition de caoutchouc selon la revendication 1, comprenant de 40 à 135 phr d'une matière de charge pour le renforcement comprenant :
(A) de la silice telle qu'une silice précipitée synthétique amorphe ; ou
(B) un noir de carbone pour le renforcement du caoutchouc ; ou
(C) une combinaison de la silice et du noir de carbone pour le renforcement du caoutchouc, de préférence dans un rapport pondéral dans la plage de 1/1 à 10/1.

3. Composition de caoutchouc selon la revendication 2, comprenant un agent de couplage pour la silice, qui possède une fraction apte à réagir avec les groupes hydroxyle sur la silice et une autre fraction qui entre en interaction avec au moins un des élastomères.

4. Composition de caoutchouc selon au moins une des revendications précédentes, dans laquelle le monomère fonctionnalisé répondant à la formule développée (I) représente du pyrrolidine éthyl styrène, de la vinyl benzyl pyrrolidine ou de la vinyl benzyl diméthyl amine.

5. Composition de caoutchouc selon au moins une des revendications précédentes, dans laquelle le polybutadiène à fonctionnalité intracaténaire comprend des unités de répétition qui dérivent du 1,3-butadiène et au moins un monomère choisi parmi le groupe comprenant du pyrrolidine éthyl styrène, de la vinyl benzyl pyrrolidine et de la vinyl benzyl diméthyl amine.

6. Composition de caoutchouc selon au moins une des revendications précédentes, dans laquelle le copolymère de polybutadiène à fonctionnalité intracaténaire comprend en outre, à concurrence de 2 à 25 %, des unités de répétition qui dérivent de l'isoprène.

7. Composition de caoutchouc selon au moins une des revendications précédentes, dans laquelle le caoutchouc de polybutadiène à fonctionnalité intracaténaire est un copolymère du 1,3-butadiène et d'un monomère fonctionnalisé, que l'on prépare par copolymérisation anionique du 1,3 butadiène et de monomères fonctionnels dans un solvant d'hydrocarbure en présence d'un initiateur de la polymérisation comprenant du n-butyllithium pour déclencher la copolymérisation à laquelle on ajoute un modificateur de la polymérisation pour favoriser l'incorporation des unités monomères fonctionnelles le long de la chaîne du polybutadiène comprenant de la tétraméthyléthylènediamine.

8. Composition de caoutchouc selon au moins une des revendications précédentes, dans laquelle l'élastomère de styrène/butadiène difonctionnalisé en position terminale représente un élastomère de styrène/butadiène contenant une fonctionnalisation terminale comprenant une combinaison d'un alcoxysilane et de groupes amino primaires ou une combinaison d'un alcoxysilane et de groupes thiols.

9. Composition de caoutchouc selon au moins une des revendications précédentes, dans laquelle l'élastomère de styrène/butadiène difonctionnalisé en position terminale est soumis au moins en partie à un allongement de chaîne avec du tétrachlorure d'étain ou du tétrachlorure de silicium.

10. Composition de caoutchouc selon au moins une des revendications précédentes, dans laquelle l'élastomère de polybutadiène à fonctionnalité intracaténaires est soumis au moins en partie à un allongement de chaîne avec du tétrachlorure d'étain ou du tétrachlorure de silicium.

11. Composition de caoutchouc selon au moins une des revendications précédentes, dans laquelle l'élastomère de styrène/butadiène difonctionnalisé en position terminale répond à la formule : 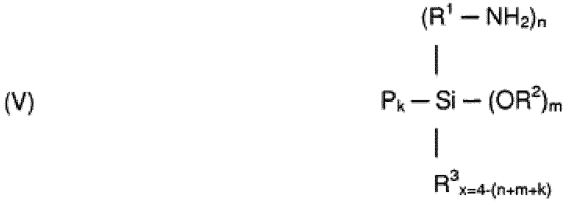 dans laquelle P représente une chaîne copolymère d'un copolymère de styrène/butadiène, R¹ représente un groupe alkylène contenant de 1 à 12 atomes de carbone, R² et R³ sont choisis, chacun de manière indépendante, parmi un groupe alkyle contenant de 1 à 20 atomes de carbone, un groupe allyle ou un groupe aryle, R² représente de préférence un groupe éthyle, n prend une valeur de 1 ou 2, m prend une valeur de 1 ou 2, de préférence est égal à 2, k prend une valeur de 1 ou 2, x prend une valeur de 0 à 1, avec cette exception que n+m+k représente un entier de 3 ou 4.

12. Composition de caoutchouc selon au moins une des revendications précédentes, dans laquelle l'élastomère de styrène/butadiène difonctionnalisé en position terminale est difonctionnalisé en position terminale avec un groupe alcoxysilane et un groupe thiol, sous la forme d'un produit réactionnel d'un polymère anionique vivant de styrène/butadiène et d'un silane-sulfure répondant à la formule VI :
(VI) (R⁴O)ₓR⁴_{y}Si-R⁵-S-SiR⁴₃
dans laquelle Si représente un atome de silicium ; S représente un atome de soufre ; O représente un atome d'oxygène ; x représente un entier choisi parmi 1, 2 et 3 ; y représente un entier choisi parmi 0, 1 et 2 ; x+y = 3 ; les groupes R⁴ sont identiques ou différents et représentent un groupe alkyle en C₁-C₁₆, de préférence un groupe alkyle en C₁-C₅; et R⁵ représente un groupe aryle, un groupe alkylaryle ou un groupe alkyle en C₁-C₁₆, de préférence un groupe alkyle en C₁-C₅.

13. Composition de caoutchouc selon au moins une des revendications précédentes, dans laquelle l'élastomère de styrène/butadiène difonctionnalisé en position terminale contient des unités de styrène lié à concurrence de 18 à 28 %.

14. Composition de caoutchouc selon au moins une des revendications précédentes, dans laquelle la composition de caoutchouc contient des ingrédients de vulcanisation au soufre comprenant du soufre, un accélérateur primaire de la vulcanisation au soufre comprenant du N,N-dicyclohexyl-2-benzothiazolsulfénamide et un accélérateur secondaire de la vulcanisation au soufre comprenant du dibenzyldithiocarbamate de zinc, la diphénylguanidine étant exclue ; ou dans laquelle la composition de caoutchouc contient des ingrédients de vulcanisation au soufre comprenant du soufre et un ou plusieurs accélérateurs de la vulcanisation au soufre, à l'exclusion de la diphénylguanidine.

15. Bandage pneumatique possédant un composant comprenant la composition de caoutchouc selon au moins une des revendications précédentes.
